# EUROPEAN PATENT SPECIFICATION

(11) **EP 1 308 567 B1**
(45) Date of publication and mention of the grant of the patent: **16.02.2005**
(21) Application number: 02102484.9
(22) Date of filing: 25.10.2002
(51) Int. Cl.: E03F 5/042, F16K 15/04

(54) **Non-return valve**
Rückschlagventil
Clapet non-retour

(30) Priority: 30.10.2001 FI 20010405 U
(43) Date of publication of application: 07.05.2003
(73) Proprietor: Uponor Innovation AB, 513 81 Fristad (SE)
(72) Inventor: Hippeläinen, Esko, 15200, Lahti (FI)
(74) Representative: Huhtanen, Ossi Jaakko

(56) References cited:
- FI-B- 76 399
- FR-A- 2 631 674
- US-A- 2 049 340
- US-A- 2 990 845

## Description

The invention relates to a non-return valve having a body with a first end intended for fitting in an inlet pipe and a second end opening downwards, a sealing arranged at the downwards-opening end of the body, a basket arranged below the sealing and a closing element located in the basket and having a smaller specific weight than that of water, whereby the closing element is able to move with the fluid level between the open and closed positions of the non-return valve.

In different chambers, such as drain and rainwater chambers, there usually is a backflow valve, or non-return valve, as extension to the inlet pipe inside the chamber. The non-return valve is typically made up of a bend-shaped, downwards-opening piece, a sealing at its bottom end and a basket below the sealing that has a ball serving as the valve element and floating on water. This non-return valve serving as a reflux block closes when the water level in the chamber rises as a result of a blockage in the outlet pipe or a flood. The water level lifts the valve element against the sealing at the bottom end of the pipe, thus preventing water from flowing from the chamber to the inlet pipe, since it would be extremely harmful for example in drainages, if water entered the foundation of a building. This type of non-return valve is disclosed in FI patent 76399, for instance.

Rubbish, such as leaves and other impurities, can collect in the basket of the non-return valve. Further, the sealing and ball can become dirty due to accumulated slime, for example. Non-return valves are used in underground chambers, and it is required that the non-return valves be accessible for maintenance from ground level if necessary. The non-return valve must be detached from the end of the inlet pipe and lifted to ground level for cleaning. After the cleaning, the non-return valve is installed back to the end of the inlet pipe. Detaching the non-return valve and especially its re-installation to the end of the inlet pipe is quite difficult, because the non-return valve is typically located 1.5 to 4 metres below ground and can only be reached through an opened chamber cover. The diameter of the chamber cover can be 30 to 40 cm, for instance, which means that handling the non-retum valve through the opened chamber cover is quite awkward.

It is an object of the present invention to provide a non-return valve in which the problems caused by impurities can be reduced.

The non-return valve of the invention is characterized in that the valve has a pivot so that the basket is turnable aside on the pivot from below the open end of the body for maintenance.

The essential idea of the invention is that in the non-return valve that has an open downwards-oriented end, a sealing arranged to the end, a basket below the sealing and a closing element in the basket, the weight by volume of which is smaller than that of the fluid in the chamber and which can move with the level of the fluid between the open and closed positions, the basket in question is arranged to a pivot so that the basket can be turned aside on the pivot from below the open end for maintenance. The idea of a preferred embodiment is that the basket is pivoted to turn on the pivot from the closed position to either direction. The idea of a second preferred embodiment is that the basket is open at the bottom.

An advantage of the invention is that the basket can be turned aside from above ground by means of a hook or a crank-like pin, for instance, for maintenance and cleaning. The sealing can for instance be rinsed with water from ground level by using a suitable nozzle that sprays the sealing from below. The closing element can be rinsed in the basket or lifted up to ground level by means of a suction hose belonging to regular maintenance equipment. After cleaning, the basket can be turned back by means of the above-mentioned hook or crank-like pin, i.e. the non-return valve can be serviced without detaching it and entirely from ground level. Further, there is no need to detach other parts than the closing element from the non-return valve for maintenance, i.e. during servicing, there are no loose parts of the non-return valve that are difficult to re-install. When the basket is pivoted to turn to both directions, it can be turned for maintenance towards the direction where there is more space in the chamber, i.e. the choice of the installation point of the non-return valve is not critical and non-return valves can be installed even in quite narrow chambers. If the basket is made open at the bottom, no leaves, needles or other rubbish can substantially collect in the basket.

The invention will be described in greater detail in the attached drawings, in which
Figure 1 is a schematic cross-sectional side view of a rainwater chamber,
Figure 2 is a schematic side view of a non-return valve,
Figure 3 shows the non-return valve of Figure 2 in a maintenance situation, and
Figure 4 is a bottom view of the non-return valve of Figure 2.

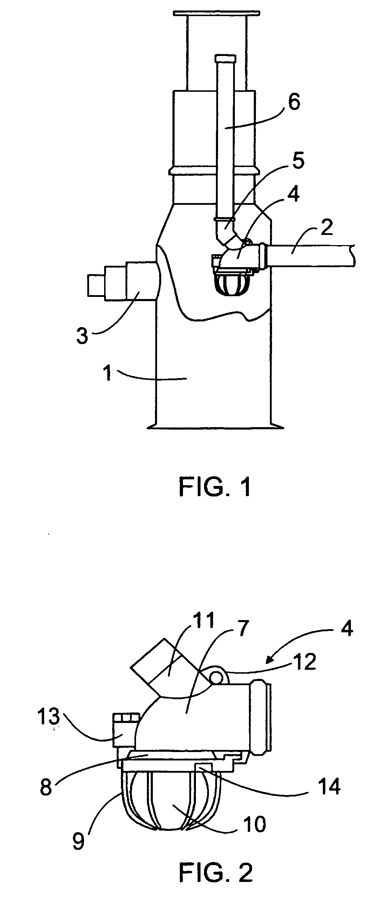

Figure 1 shows a rainwater chamber 1. An inlet pipe 2 is connected to a hole made in the wall of the rainwater chamber 1. The rainwater chamber further has an outlet fitting 3 to which an outlet pipe is connected. A non-return valve 4 is arranged at the end of the inlet pipe. So that the non-return valve 4 can operate, the bottom edge of the inlet pipe 2 is positioned higher than the bottom edge of the outlet pipe connected to the fitting 3. If the diameter of the inlet pipe is 110 mm, for instance, the difference in elevation between the bottom edge of the inlet pipe 2 and that of the outlet pipe should typically be at least 12 cm. A flush pipe 6 is connected by a bend 5 to the top part of the non-return valve 4. The flush pipe 6 can be used to flush both the non-return valve 4 and the inlet pipe 2.

Figure 2 shows the non-return valve 4 from the side. The non-return valve 4 has a body 7 that is in the shape of a bend or a branch piece, for instance. The first end of the body 7 is connected to the inlet pipe 2. The second end of the body 7 opens downwards. The downwards-opening end of the body has a sealing 8 arranged to it and below the sealing a basket 9. Inside the basket 9, there is a ball 10 serving as a closing element and having a smaller specific weight than that of water so that it floats on the surface of the water. The ball 10 is preferably made of a material having a smaller specific weight than that of water, such as polyethylene PE. The ball 10 is dimensioned to substantially conform to the shape of the bottom part of the basket 9 and to close the non-return valve 4 when pressing against the sealing 8.

The body 7 also has a fitting 11 for the flush pipe 6. Further, the non-return valve 4 has a lifting lug 12 from which the non-return valve 4 can be lifted by means of a hooked stick, for instance. If a flush pipe 6 is arranged to the fitting 11, it is also possible to utilize the flush pipe 6 to lift the non-return valve 4, i.e. the non-return valve 4 can be lifted out of the chamber 1 by means of the flush pipe 6 for maintenance or replacement.

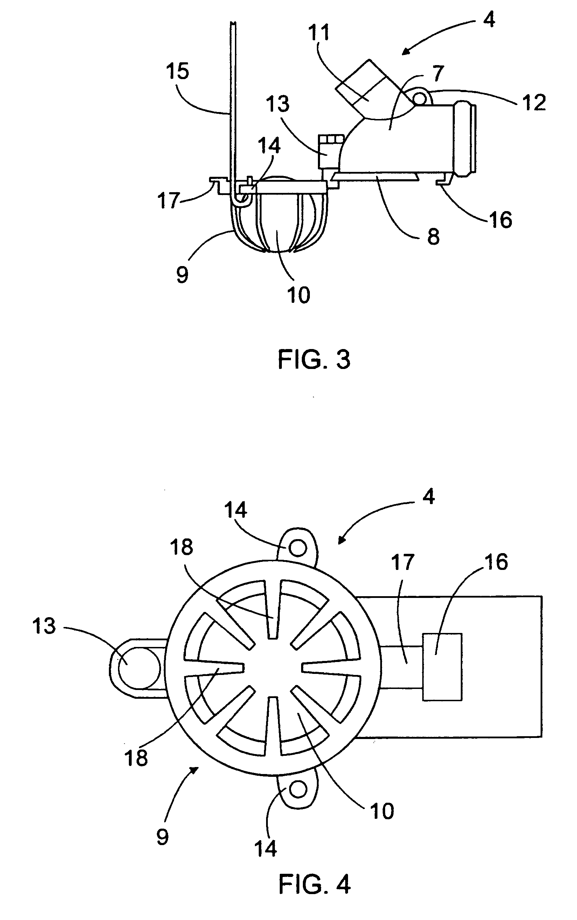

During ordinary maintenance and/or cleaning, the non-return valve 4 need, however, not be lifted out of the chamber 1. For maintenance purposes, the non-return valve 4 is equipped with a pivot 13 in such a manner that the basket 9 is arranged to turn on the pivot 13. The basket 9 has a turning lug 14 to which a turning rod 15 can be arranged, the turning rod being a rod having a hook at its end or a crank-like pin. By means of the turning rod 15, the basket 9 can be turned from below the body 7 into the position shown in Figure 3, for example.

When the basket 9 is turned from below the body 7, the sealing 8 can be rinsed from below by means of a suitable nozzle, for example. The ball 10 can be rinsed in the basket 9 or the ball 10 can be lifted to ground level for cleaning by means of a suction hose belonging to regular maintenance equipment. After cleaning, the basket 9 is turned back with the turning rod 15.

To ensure that the basket 9 is in the correct position below the sealing 8, the body 7 has a locking support 16 and the basket 9 a locking projection 17. When the basket 9 is turned with the turning rod 15 below the sealing 8, the locking projection 17 settles into the locking support 16. The locking support 16 can be made in such a manner that it has a protrusion in the middle and the locking projection, in turn, has an upward recess in the middle, whereby during the normal use of the non-return valve 4, the locking projection 17 locks at the correct point on top of the locking support 16.

Figure 4 shows the non-return valve 4 from below. The basket 9 can turn on the pivot 13 to either direction. Because of this, the basket 9 has two turning lugs 14 arranged to it to allow the turning rod 15 to be placed on the side of the non-return valve 9 towards which the basket 9 can be most easily turned in the chamber 1.

The basket 9 is made up of rods 18. The rods 18 are not connected to each other on the bottom edge of the basket 9, i.e. the basket 9 is open at the bottom. This way, even largish rubbish, such as leaves or needles or the like, cannot collect into the basket 9 and the non-return valve remains clean quite well.

The drawings and the related description are intended only to illustrate the idea of the invention. The invention may vary in detail within the scope of the claims. Therefore, the non-return valve 4 can be installed to an drain chamber, rainwater chamber or some other corresponding structure. Further, instead of the ball 10, it is possible to use some other piece with a shape that differs at least to some extent from a ball.

## Claims

1. A non-return valve having a body (7) with a first end intended for fitting in an inlet pipe (2) and a second end opening downwards, a sealing (8) arranged at the downwards-opening end of the body (7), a basket (9) arranged below the sealing (8) and a closing element located in the basket (9) and having a smaller specific weight than that of water, whereby the closing element is able to move with the fluid level between the open and closed positions of the non-return valve (4), **characterized in that** the non-return valve (4) has a pivot (13) so that the basket (9) is turnable aside on the pivot (13) from below the open end of the body (7) for maintenance.

2. A non-return valve as claimed in claim 1, **characterized in that** at least one turning lug (14) is arranged to the basket (9) to turn the basket (9) by means of a turning rod (15).

3. A non-return valve as claimed in claim 1 or 2, **characterized in that** the basket (9) is pivoted to turn on the pivot (13) from the closed position to either side.

4. A non-return valve as claimed in any one of the preceding claims, **characterized in that** the body (7) has a locking support (16) and the basket (9) has a locking projection (17) for locking the basket (9) at the open end of the body (7).

5. A non-return valve as claimed in any one of the preceding claims, **characterized in that** the basket (9) is open at the bottom.

## Patentansprüche

1. Rückschlagventil mit einem Körper (7) mit einem ersten Ende zum Einsetzen in ein Einlassrohr (2) und einem zweiten nach unten offenen Ende, einer am nach unten offenen Ende des Körpers (7) angeordneten Dichtung (8), einem unter der Dichtung (8) angeordneten Korb (9) und einem in dem Korb (9) angeordneten Schließelement mit einem geringeren spezifischen Gewicht als Wasser, wodurch das Schließelement in der Lage ist, sich mit dem Fluidpegel zwischen der geöffneten und der geschlossenen Stellung des Rückschlagventils (4) zu bewegen, **dadurch gekennzeichnet, dass** das Rückschlagventil (4) einen Schwenkpunkt (13) aufweist, so dass der Korb (9) auf dem Zapfen (13) zur Wartung von unterhalb des offenen Endes des Körpers (7) seitwärts verschwenkbar ist.

2. Rückschlagventil nach Anspruch 1, **dadurch gekennzeichnet, dass** zumindest eine Schwenköse (14) an dem Korb (9) zum Schwenken des Korbs (9) mittels einer Schwenkstange (15) vorgesehen ist.

3. Rückschlagventil nach Anspruch 1 oder 2, **dadurch gekennzeichnet, dass** der Korb (9) geschwenkt wird, um sich um den Punkt (13) aus der geschlossenen Position auf beide Seiten zu drehen.

4. Rückschlagventil nach einem der vorhergehenden Ansprüche, **dadurch gekennzeichnet, dass** der Körper (7) eine Verriegelungsstütze (16) und der Korb (9) einen Verriegelungsvorsprung (17) zum Verriegeln des Korbs (9) am offenen Ende des Körpers (7) aufweist.

5. Rückschlagventil nach einem der vorhergehenden Ansprüche, **dadurch gekennzeichnet, dass** der Korb (9) am Boden offen ist.

## Revendications

1. Clapet non-retour comportant un corps (7) ayant un premier bout destiné à recevoir un tuyau d'admission (2) et un second bout débouchant vers le bas, une garniture d'étanchéité (8) disposée au bout de corps (7) débouchant vers le bas, une corbeille (9) disposée sous la garniture d'étanchéité (8) et un élément de fermeture situé dans la corbeille (9) et dont le poids spécifique est inférieur à celui de l'eau, et par conséquent l'élément de fermeture est capable de se mouvoir, suivant le niveau du fluide, entre la position ouverte et la position close du clapet non-retour (4), **caractérisé en ce que** le clapet non-retour a une charnière (13) pour permettre à la corbeille d'être écartée autour de la charnière (13) de dessous du bout ouvert du corps (7) pour entretien.

2. Clapet non-retour selon la revendication 1, **caractérisé en ce que** la corbeille (9) est munie au moins d'une oreille (14) pour tourner la corbeille (9) à l'aide d'un bâton de tournage (15).

3. Clapet non-retour selon la revendication 1 ou 2, **caractérisé en ce que** la corbeille (9) est pivotée pour se tourner autour de la charnière (13) dans toutes les deux directions de la position close.

4. Clapet non-retour selon l'une quelconque des revendications précédentes, **caractérisé en ce que** le corps (7) porte un support de verrouillage (16) et la corbeille porte une saillie de verrouillage (17) pour verrouiller la corbeille (9) au bout ouvert du corps (7).

5. Clapet non-retour selon l'une quelconque des revendications précédentes, **caractérisé en ce que** la corbeille (9) présente un fond ouvert.
